# EUROPÄISCHE PATENTSCHRIFT

(11) **EP 3 472 023 B1**
(45) Veröffentlichungstag und Bekanntmachung des Hinweises auf die Patenterteilung: **02.12.2020**
(21) Anmeldenummer: 17734004.9
(22) Anmeldetag: 16.06.2017
(51) Int. Cl.: B62D 1/184, B62D 1/19

(54) **LENKSÄULE FÜR EIN KRAFTFAHRZEUG**
STEERING COLUMN FOR A MOTOR VEHICLE
COLONNE DE DIRECTION POUR VÉHICULE À MOTEUR

(30) Priorität: 17.06.2016 DE 102016210833
(43) Veröffentlichungstag der Anmeldung: 24.04.2019
(73) Patentinhaber: thyssenkrupp Presta AG, 9492 Eschen (LI); thyssenkrupp AG, 45143 Essen (DE)
(72) Erfinder: PALTINISANU, Ciprian, 9492 Eschen (LI); SCHNITZER, Hieronymus, 9487 Gamprin (LI)
(74) Vertreter: thyssenkrupp Intellectual Property GmbH
(86) Internationale Anmeldenummer: PCT/EP2017/064779
(87) Internationale Veröffentlichungsnummer: WO 2017/216348

(56) Entgegenhaltungen:
- US-A1- 2016 159 387

## Beschreibung

### Stand der Technik

Die Erfindung betrifft eine Lenksäule für ein Kraftfahrzeug, umfassend ein inneres Mantelrohr, in dem eine Lenkspindel um ihre Längsachse drehbar gelagert ist, eine äußere Manteleinheit, in der das innere Mantelrohr gehaltert ist, und die mit der Karosserie eines Kraftfahrzeugs direkt oder indirekt verbindbar ist, eine Spanneinrichtung, die in Fixierstellung die äußere Manteleinheit relativ zu dem inneren Mantelrohr festlegt und die in Freigabestellung eine Verstellung des inneren Mantelrohrs relativ zur äußeren Manteleinheit zumindest in Längsrichtung freigibt, wobei die Spanneinrichtung mindestens ein Arretierelement aufweist, welches sich in Längsrichtung an der äußeren Manteleinheit abstützt und in Fixierstellung in Längsrichtung unverschiebbar mit einem Eingriffselement verbunden ist, welches mit dem inneren Mantelrohr verbunden ist, und in Freigabestellung von dem Eingriffselement gelöst ist und eine relative Bewegung des inneren Mantelrohrs zur äußeren Manteleinheit in Längsrichtung freigibt, wobei das innere Mantelrohr und die äußere Manteleinheit über eine Energieabsorptionseinrichtung gekoppelt sind, die zumindest zwei Energieabsorptionselemente und eine Koppelvorrichtung aufweist, wobei über die Koppelvorrichtung zumindest ein erstes oder ein zweites Energieabsorptionselement zwischen dem inneren Mantelrohr und der äußeren Manteleinheit einkoppelbar oder auskoppelbar ist, welches in eingekoppeltem Zustand in Fixierstellung der Spanneinrichtung bei einer relativen Verschiebung von innerem Mantelrohr und äußerer Manteleinheit plastisch verformbar ist, wobei die Energieabsorptionselemente zwischen der Koppelvorrichtung und dem Eingriffselement angeordnet sind, wobei die Koppelvorrichtung mit der äußeren Manteleinheit verbunden ist und ein bewegbares Koppelelement aufweist, welches bei Aktivierung der Koppelvorrichtung mindestens ein Energieabsorptionselement zwischen dem inneren Mantelrohr und dem Eingriffselement einkoppelt oder auskoppelt.

Zur Anpassung der Lenkradposition an die Sitzposition des Fahrers eines Kraftfahrzeugs sind derartige Lenksäulen in unterschiedlichen Ausführungsformen im Stand der Technik bekannt. Neben einer Höhenverstellung durch die Einstellung der Neigung der Lenksäule kann das am hinteren Ende der Lenkspindel angebrachte Lenkrad bei gattungsgemäßen Lenksäulen durch eine Verstellung in Längsrichtung der Lenksäulen-Längsachse im Fahrzeuginnenraum positioniert werden.

Die Längenverstellbarkeit wird dadurch realisiert, dass die Stelleinheit, bestehend aus einer äußeren Manteleinheit und einem inneren Mantelrohr, welches die drehbar gelagerte Lenkspindel umfasst, in Längsrichtung teleskopartig ein- und ausschiebbar ist und mittels einer lösbaren Spanneinrichtung in unterschiedlichen Längspositionen feststellbar, d.h. lösbar fixierbar ist. Die Spanneinrichtung, auch als Feststelleinrichtung bezeichnet, wirkt auf die an der Karosserie gehaltene äußere Manteleinheit, wobei in geöffnetem Zustand der Spanneinrichtung - auch gleichbedeutend als Freigabestellung oder Löseposition bezeichnet - eine Verschiebung des inneren Mantelrohrs in der äußeren Manteleinheit zur Einstellung der Lenkradposition möglich ist und in geschlossenem Zustand - auch Fixierstellung oder Feststellposition genannt - das innere Mantelrohr in der äußeren Manteleinheit verspannt ist und im normalen Fahrbetrieb die Lenkradposition unter den zu erwartenden mechanischen Beanspruchungen fixiert ist.

Als wirksame Maßnahme zur Verbesserung der Insassensicherheit bei einem Fahrzeugzusammenstoß, dem sogenannten Crashfall, bei dem der Fahrer mit hoher Geschwindigkeit auf das Lenkrad aufprallt, ist es bekannt, die Lenksäule auch in Fixierstellung der Spanneinrichtung in Längsrichtung zusammenschiebbar zu gestalten, wenn eine hohe Kraft auf das Lenkrad ausgeübt wird, die einen nur im Crashfall auftretenden Grenzwert überschreitet. Um für eine kontrollierte Abbremsung eines auf das Lenkrad auftreffenden Körpers zu sorgen, ist zwischen der äußeren Manteleinheit und dem inneren Mantelrohr, die im Normalbetrieb durch die Spanneinrichtung miteinander fixiert sind, im Crashfall jedoch relativ zueinander zusammengeschoben werden, eine Energieabsorptionseinrichtung eingekoppelt. Diese setzt die eingeleitete kinetische Energie in plastische Verformung eines Energieabsorptionselements um, beispielsweise durch Aufreißen einer Reißlasche oder Verbiegen eines langgestreckten Biegeelements, etwa eines Biegedrahts oder Biegestreifens.

Eine gattungsgemäße Lenksäule ist in der DE 10 2008 034 807 B3 beschrieben. Die darin beschriebene Spanneinrichtung umfasst ein Arretierelement, welches in Längsrichtung an der äußeren Manteleinheit abgestützt ist und beim Fixieren der Spanneinrichtung quer zur Längsrichtung mit einem korrespondierendem Eingriffselement an dem inneren Mantelrohr in Fixierstellung kraft- und formschlüssig in Eingriff gebracht werden kann. In Freigabestellung wird das Arretierelement von der Spanneinrichtung vom Eingriffselement abgehoben, d.h. gelöst, so dass das innere Mantelrohr in Längsrichtung zur Verstellung der Lenkradposition in der äußeren Manteleinheit verschiebbar ist.

Das Eingriffselement ist mit dem inneren Mantelrohr über eine Energieabsorptionseinrichtung verbunden, die im Normalbetrieb nicht beansprucht wird, d.h. eine starre Verbindung zwischen äußerer Manteleinheit und innerem Mantelrohr bildet. Im Crashfall jedoch wird über das Arretierelement eine so große Kraft in das Eingriffselement eingeleitet, dass sich die äußere Manteleinheit und das innere Mantelrohr in Längsrichtung gegeneinander bewegen, wobei das Energieabsorptionselement verformt und dadurch die Bewegung kontrolliert abgebremst wird.

In der besagten DE 10 2008 034 807 B3 wird weiterhin vorgeschlagen, die Bremswirkung der Energieabsorptionseinrichtung steuerbar zu gestalten, um im Crashfall zu berücksichtigen, ob der Fahrer angegurtet ist oder nicht, oder eine Anpassung an Parameter wie Fahrergewicht, Abstand vom Lenkrad und dergleichen vornehmen zu können. Im Einzelnen sind hierzu mindestens zwei Energieabsorptionselemente vorgesehen, die bei Bedarf aktiviert werden können, indem sie mittels einer Koppelvorrichtung zwischen der äußeren Manteleinheit und dem inneren Mantelrohr eingekoppelt werden, d.h. in mechanische Wirkverbindung zwischen der äußeren Manteleinheit und dem inneren Mantelrohr gebracht werden. Dazu kann im Bedarfsfall ein Aktuator der Koppelvorrichtung aktiviert werden, beispielsweise ein pyroelektrischer Aktuator oder Schalter, auch Pyroswitch genannt, der entweder das erste oder das zweite oder beide Energieabsorptionselemente in den Kraftfluss zwischen der Manteleinheit und dem Mantelrohr mechanisch einkoppelt. Auf diese Weise kann eine individuell an den jeweiligen Bedarfsfall angepasste Bremscharakteristik, d.h. ein sogenanntes Crashniveau bzw. ein Crashlevel realisiert werden.

Nachteilig an der vorbekannten Anordnung ist jedoch, dass die Koppelvorrichtung zusammen mit den Energieabsorptionselementen an dem inneren Mantelrohr befestigt ist und entsprechend beim Verstellen der Lenksäule in Längsrichtung mitbewegt wird, wodurch relativ viel Bewegungs- bzw. Bauraum beansprucht wird.

Eine ähnliche Anordnung ist in der US 2015/0375773 A1 beschrieben, bei der ein pyroelektrischer Aktuator einer Koppelvorrichtung ebenfalls zusammen mit den Energieabsorptionselementen an dem inneren Mantelrohr angebracht ist. Die Energieabsorptionselemente sind zwar platzsparend auf einer Seite des Mantelrohrs angeordnet, durch die beim Verstellen mitbewegte Koppelvorrichtung ist der Bauraum jedoch ebenfalls nachteilig groß. Dasselbe trifft im Prinzip für die aus der DE 10 2009 009 577 B3 bekannte verstellbare Lenksäule zu.

Aus der US 2016/0159387 A1, der als nächstliegender Stand der Technik angesehen wird, ist eine Lenksäule der eingangs genannten Art bekannt.

Durch die Anordnung der Energieabsorptionselemente und der Koppelvorrichtung wird in nachteiliger Weise ein relativ großer radialer Bauraum beansprucht.

Angesichts der vorangehend erläuterten Problematik ist es eine Aufgabe der vorliegenden Erfindung, eine gattungsgemäße Lenksäule mit zumindest zwei Crashniveaus zur Verfügung zu stellen, welche einen geringeren radialen Bauraum beansprucht.

### Darstellung der Erfindung

Gelöst wird die Aufgabe durch die Merkmale des Patentanspruchs 1. Vorteilhafte Weiterbildungen ergeben sich aus den Unteransprüchen.

Zur Lösung der vorgenannten Problematik wird erfindungsgemäß vorgeschlagen, dass das Koppelelement mit Abstand zur Längsachse neben dem inneren Mantelrohr angeordnet ist, so dass die Bewegungsbahn des Koppelelements quer zur Längsachse am inneren Mantelrohr vorbei verläuft.

Dadurch wird eine platzsparende Anordnung der Koppelvorrichtung an der äußeren Manteleinheit ermöglicht. Es kann eine kleinere radiale Abmessung und dadurch eine bessere Ausnutzung des zur Verfügung stehenden Bauraums realisiert werden, als wenn das Koppelement bzw. der Mitnehmerstift wie im Stand der Technik radial bezüglich der Längsachse bewegt wird.

Bei der Erfindung kann die Koppelvorrichtung, die beispielsweise einen pyroelektrischen Aktuator, kurz Pyroswitch genannt, aufweist, fest mit der äußeren Manteleinheit verbunden sein. Die Kraft wird somit im Crashfall von der äußeren Manteleinheit über die daran angebrachte Koppelvorrichtung in zumindest eines oder mehrere der Energieabsorptionselemente eingeleitet, wobei sich das oder die eingekoppelten Energieabsorptionselemente in Längsrichtung an dem Eingriffsteil gegen das innere Mantelrohr abstützen. Folglich wird im Crashfall das innere Mantelrohr mit dem Eingriffsteil relativ zur äußeren Manteleinheit und der fest damit verbundenen Koppelvorrichtung bewegt und das oder die damit gekoppelten Energieabsorptionselemente werden unter Energieabsorption verformt.

Ein Vorteil der erfindungsgemäßen Anordnung ist, dass beim Verstellen der Lenksäule, wenn das Arretierteil von dem Eingriffsteil gelöst ist und das innere Mantelrohr in Längsrichtung relativ zur äußeren Manteleinheit verschoben wird, sowohl die Koppelvorrichtung als auch die Energieabsorptionselemente an der äußeren Manteleinheit in Position verbleiben, d.h. nicht wie bei den im Stand der Technik bekannten Anordnungen in Längsrichtung mitbewegt werden. Dadurch wird ein kleinerer Bauraum benötigt und es kann ein vorteilhafter, besonders kompakter Aufbau realisiert werden.

Das Eingriffselement, welches beispielsweise als Zahnplatte ausgebildet sein kann, kann direkt außen auf dem inneren Mantelrohr, beispielsweise durch eine Nietverbindung, befestigt werden. Ebenfalls denkbar und möglich ist es, dass das Eingriffselement und das innere Mantelrohr als einstückiges integrales Bauteil ausgebildet ist, beispielsweise in dem eine Verzahnung auf das innere Mantelrohr aufgebracht ist oder das innere Mantelrohr äquidistante Ausnehmungen aufweist. Dadurch steht das Eingriffselement weniger nach außen vor als im Stand der Technik, bei dem das oder die Energieabsorptionselemente zwischen dem Eingriffselement und dem Mantelrohr eingesetzt sind.

Die Koppelvorrichtung kann ein bewegbares Koppelelement aufweisen, welches bei Aktivierung der Koppelvorrichtung mindestens ein Energieabsorptionselement zwischen dem inneren Mantelrohr und dem Eingriffselement einkoppelt oder auskoppelt. Das Koppelelement wird bei Betätigung im Bedarfsfall von der Koppelvorrichtung angetrieben, so dass es relativ zur Koppelvorrichtung und zur äußeren Manteleinheit bewegt wird, und damit auch relativ zu mindestens einem der Energieabsorptionselemente. Durch die Relativbewegung kann das Koppelelement ein oder mehrere Energieabsorptionselemente über die Koppelvorrichtung mit dem äußeren Manteleinheit mechanisch verbinden, beispielsweise durch einen formschlüssigen Eingriff, so dass das betreffende Energieabsorptionselement in den Kraftfluss zwischen der äußeren Manteleinheit und dem inneren Mantelrohr eingekoppelt ist. Durch das oder die zusätzlich eingekoppelten Energieabsorptionselemente kann im Crashfall mehr Energie absorbiert werden, wodurch das Crashniveau erhöht wird.

Alternativ ist es denkbar und möglich, dass durch das Koppelelement im Ruhezustand, wenn die Koppelvorrichtung nicht aktiviert ist, mindestens eines der Energieabsorptionselemente durch das Koppelelement im Kraftfluss zwischen dem inneren Mantelrohr und der äußeren Manteleinheit eingekoppelt ist, und dass beim Aktivieren der Koppelvorrichtung durch die Relativbewegung des Koppelelements ein oder mehrere Energieabsorptionselemente aus der Verbindung zwischen der Koppelvorrichtung und dem inneren Mantelrohr ausgekoppelt werden, also gelöst werden. Das oder die ausgekoppelten Energieabsorptionselemente werden im Crashfall nicht verformt, so dass entsprechend weniger Energie absorbiert wird und das Crashniveau verringert wird.

In einer praktischen Ausgestaltung kann die Koppelvorrichtung einen pyroelektrischen Aktuator aufweisen, der zum pyrotechnischen Antrieb des Koppelelements ansteuerbar ist. Der pyroelektrische Aktuator weist eine pyrotechnische Treibladung auf, die durch einen elektrischen Impuls gezündet werden kann. Durch die Explosion der Treibladung wird das Koppelelement relativ zur Koppelvorrichtung und damit relativ zu mindestens einem der Energieabsorptionselemente bewegt, wobei mindestens ein Energieabsorptionselement ein- oder ausgekoppelt wird.

Das Koppelelement kann einen Mitnehmerstift aufweisen, der zur Einkopplung oder Auskopplung quer zur Längsachse bewegbar ist und in oder außer Wirkeingriff mit einem Energieabsorptionselement bringbar ist. Der Mitnehmerstift kann bei Aktivierung der Koppelvorrichtung in Richtung seiner stiftförmigen Längserstreckung bewegt werden. Bevorzugt wird das Koppelelement mit Abstand zur Längsachse neben dem inneren Mantelrohr angeordnet, so dass die Bewegungsbahn des Mitnehmerstifts quer zur Längsachse am inneren Mantelrohr vorbei verläuft.

Eine vorteilhafte Ausführung der Erfindung sieht vor, dass ein Energieabsorptionselement als langgestrecktes Biegeelement ausgebildet ist, das zwei über eine Umbiegung miteinander verbundene Schenkel aufweist, wobei die Umbiegung und die Schenkel parallel zu einer Biegeebene mit einer Flächennormalen liegen. Mit anderen Worten wird die Umbiegung durch eine Biegung um eine Biegeachse gebildet, die parallel zur Flächennormalen liegt. Die beiden Schenkel dieser auch als Biegestreifen oder Biegedraht bezeichneten Bauform sind bevorzugt über eine Umbiegung von etwa 180° miteinander verbunden und erstrecken sich folglich in der Biegeebene liegend im Wesentlichen parallel zueinander. Die Schenkel liegen dann ebenfalls parallel zur Längsachse. Im Crashfall wird die Kraft in Längsrichtung in den ersten der Schenkel eingeleitet, während der zweite Schenkel relativ dazu abgestützt wird, so dass ein langgestreckter Schenkel des Biegeelements durch die Umbiegung hindurchlaufend zum anderen Schenkel umgebogen wird. Zur Ein- oder Auskopplung kann von der Koppelvorrichtung der erste Schenkel an die im Crashfall feststehende äußere Manteleinheit angekoppelt oder von dieser gelöst werden. Der zweite Schenkel kann sich an dem im Crashfall relativ zur äußeren Manteleinheit bewegten inneren Mantelrohr in Längsrichtung abstützen. Im Crashfall wird ein Biegeelement im eingekoppelten Zustand folglich zur Energieabsorption verformt, im ausgekoppelten Zustand nimmt es im Crashfall keine Energie auf.

Bevorzugt sind die Energieabsorptionselemente symmetrische zu der Biegeebene angeordnet, wobei die Längsachse mit der Ebene zusammenfällt und die Ebene orthogonal zur Flächennormalen angeordnet ist. Bevorzugt ist die Flächennormale parallel zum Spannbolzen angeordnet.

Bevorzugt kann vorgesehen sein, dass der erste Schenkel eines Biegeelements an der Koppelvorrichtung festlegbar ist und der zweite Schenkel an dem Eingriffselement in Längsrichtung abstützbar ist. Das Ein- oder Auskoppeln eines Biegeelements kann einfach dadurch erfolgen, dass ein Koppelelement, beispielsweise ein Mitnehmerstift, formschlüssig mit einer Öffnung, einem Mitnehmerhaken oder dergleichen an dem ersten Schenkel in Eingriff gebracht wird und dadurch für die Verbindung mit der Koppelvorrichtung sorgt, oder alternativ das Koppelelement im Crashfall aus dem Eingriff herausbewegt wird und das Biegeelement von der Koppelvorrichtung auskoppelt und es dadurch deaktiviert. Mit seinem zweiten Schenkel kann sich das Biegeelement über das Eingriffselement an dem inneren Mantelrohr abstützen. Im Crashfall wird es nur dann deformiert, wenn es über das Koppelelement mit der Koppelvorrichtung verbunden ist.

Es ist möglich, dass ein Energieabsorptionselement an dem Arretierelement abstützbar ist. Das Arretierelement erzeugt im geschlossenen Zustand der Feststelleinrichtung einen Kraftschluss in Längsrichtung mit dem Eingriffselement, welches seinerseits fest mit dem Mantelrohr verbunden ist. Im Crashfall wird folglich die Kraft zur Verformung des oder der Energieabsorptionselemente über das Arretierelement und das Eingriffselement in das Mantelrohr eingeleitet. In der Praxis können das Arretierelement und das Eingriffselement korrespondierende Verbindungselemente aufweisen, beispielsweise in Form von Formschlusselementen wie Verzahnungen oder dergleichen, die beim Schließen der Feststellvorrichtung senkrecht zur Längsachse miteinander in Eingriff bringbar sind und dadurch formschlüssig in Längsrichtung unverschiebbar miteinander fixiert sind. Das Eingriffselement kann beispielsweise als in Längsrichtung langgestreckte, quer dazu verzahnte Zahnplatte ausgebildet sein, in welche das als Zahnstein mit korrespondierender Gegenverzahnung ausgebildete Arretierelement zur Einstellung unterschiedlicher Verstellpositionen in Eingriff bringbar ist.

Eine vorteilhafte Ausgestaltung sieht vor, dass das Arretierelement ein Übertragungselement aufweist, gegen das zumindest eines der Energieabsorptionselemente in Längsrichtung abstützbar ist. Das Übertragungselement ist mit dem Arretierelement verbunden und sorgt im geschlossenen Zustand für die Übertragung der Festklemm- oder Spannkraft der Feststellvorrichtung von dem Arretierelement auf das Eingriffselement. Hierzu kann das Übertragungselement die Verbindungselemente zur Verbindung mit dem Eingriffselement aufweisen, beispielsweise wie vorangehend beschrieben eine Verzahnung. Das mindestens eine Energieabsorptionselement kann sich in Längsrichtung an dem Übertragungselement abstützen. Dadurch wird im Crashfall die Kraft über das Übertragungselement auf das mindestens eine Energieabsorptionselement übertragen, welches dann durch die Längsbewegung relativ zur feststehenden Koppelvorrichtung unter Energieabsorption verformt wird.

Es ist vorteilhaft, dass das Übertragungselement mit dem Arretierelement über eine separierbare Verbindung verbunden ist. Im Normalbetrieb ist das Übertragungselement über die dann intakte, d.h. nicht separierte, separierbare Verbindung an dem Arretierelement befestigt und ermöglicht, dass beim Betätigen der Feststellvorrichtung das Übertragungselement zusammen mit dem Arretierelement bewegt wird zum Fixieren oder Lösen des Eingriffs zwischen Arretierelement und Eingriffselement. Dabei weist die separierbare Verbindung eine Sollbruchstelle oder Sollreißstelle auf, beim Überschreiten einer Grenzkraft in Längsrichtung, die im Crashfall zwischen dem Eingriffselement und dem Arretierelement wirkt, bricht oder reißt und dadurch getrennt, d.h. separiert wird. Dadurch wird das Übertragungselement von dem Arretierelement getrennt und kann sich zusammen mit dem am Mantelrohr befestigten Eingriffselement in Längsrichtung relativ zur äußeren Manteleinheit bewegen. Dabei leitet das Übertragungselement die Kraft zur Verformung von dem inneren Mantelrohr in das oder die Energieabsorptionselemente ein, die über die Koppelvorrichtung an die äußere Manteleinheit angekoppelt sind.

Die separierbare Verbindung kann ein Sollbruchelement aufweisen, welches zwischen dem Arretierelement und dem Übertragungselement angeordnet ist. Das Sollbruchelement kann eine Schwachstelle bilden oder aufweisen, beispielsweise eine Sollbruch- oder Sollreißstelle, welche beim Überschreiten einer vorab definierten Sollbruchkraft durchtrennt wird und eine relative Bewegung von Arretierelement und Übertragungselement in Längsrichtung freigibt. Beispielsweise kann das Sollbruchelement einen Scherstift aufweisen, der mit dem einen Ende am Arretierelement und mit dem anderen Ende am Übertragungselement festgelegt ist, und der durch die Sollbruchkraft abgeschert oder gebrochen wird. Ein derartiger Scherstift kann beispielsweise aus einem Material gefertigt sein, beispielsweise Aluminium oder Kunststoff, welches weicher oder spröder ist und eine geringere mechanische Belastbarkeit (Festigkeit) hat als das Material, in der Regel Stahl, aus dem das Arretierelement und das Eingriffselement üblicherweise gefertigt sind. Dadurch ist ein sicheres Abscheren oder Brechen im Crashfall gewährleistet, wodurch die Energieabsorption in dem oder den zwischen Übertragungselement und Koppelvorrichtung eingekoppelten Energieabsorptionselementen erfolgen kann.

Es kann vorgesehen sein, dass ein Energieabsorptionselement von einem Gehäuse umgeben ist, welches seine Verformung im Crashfall räumlich begrenzt. Das Gehäuse kann an der äußeren Manteleinheit angebracht sein, oder in der äußeren Manteleinheit integriert bzw. zusammen mit dieser ausgebildet sein. Mit seinem Gehäuseinnenraum umschließt es das oder die Energieabsorptionselemente, so dass ein definierter Raum für eine kontrollierte Deformation zur Verfügung gestellt wird. Dadurch wird sichergestellt, dass auch bei den im Crashfall wirkenden extremen Kräften kein unkontrolliertes Ausweichen beim Verformen auftreten kann, was im Hinblick auf die Funktionssicherheit vorteilhaft ist.

Zwei oder mehrere Energieabsorptionselemente können bezüglich der Längsachse in einer Radialrichtung auf der gleichen Seite des inneren Mantelrohrs angeordnet sein. Dadurch können die Energieabsorptionselemente in einer einzigen integrierten Energieabsorptionseinrichtung mit mindestens zwei Crashniveaus auf einer Seite des inneren Mantelrohrs zusammengefasst werden.

Die erfindungsgemäße Energieabsorptionseinrichtung weist mindestens zwei Energieabsorptionselemente auf, die bei Bedarf durch die Koppelvorrichtung einzeln oder zusammen aktiviert werden können. Die Aktivierung kann erfolgen, indem ein Energieabsorptionselement zwischen dem inneren Mantelrohr und dem Eingriffselement ein- oder ausgekoppelt wird, d.h. dass zwischen dem Energieabsorptionselement und dem Mantelrohr und dem Eingriffselement eine mechanische Wirkverbindung geschaffen oder unterbrochen wird. Das Crashniveau bzw. der Betrag der Abbremsung kann durch eine gesteuerte Einkopplung von Energieabsorptionselementen erhöht und umgekehrt durch eine Auskopplung verringert werden.

Ein besonderer Vorteil der Erfindung ist, dass mindestens besagte zwei, und gegebenenfalls weitere Energieabsorptionselemente in einer erfindungsgemäßen Energieabsorptionseinrichtung baulich zu einer integrierten Einheit zusammengefasst werden können, die als Ganzes auf einer Seite des Mantelrohrs bzw. der Lenksäule montiert werden kann. Dadurch wird eine besonders kompakte Bauform einer Energieabsorptionseinrichtung mit zwei oder mehr Crashniveaus ermöglicht, welche weniger Einbauraum erfordert als im Stand der Technik.

Eine vorteilhafte Ausführung sieht vor, dass zumindest das erste und das zweite Energieabsorptionselement bezüglich der Längsachse in einer Radialrichtung sandwichartig benachbart angeordnet sind. In dieser Bauform sind zwei oder mehr Energieabsorptionselemente stapelförmig übereinander oder nebeneinander angeordnet und bilden eine besonders kompakte Baugruppe. Wenn die Energieabsorptionselement als Biegestreifen ausgebildet sind, können sie eine gemeinsame Biegeachse parallel zur Normalenrichtung haben, oder zumindest parallele Biegeachsen, wodurch sie im Wesentlichen deckungsgleich parallel zueinander angeordnet sind. Es kann vorteilhaft sein, dass sich die Biegestreifen jeweils mit demselben Ende an der Koppeleinrichtung und an dem Eingriffselement in Längsrichtung abstützen. Durch die im Wesentlichen deckungsgleiche Anordnung nebeneinander kann eine kompakte Bauform realisiert werden.

Mindestens zwei Energieabsorptionselemente können in einem gemeinsamen Gehäuse angeordnet sein. Das Gehäuse bildet einen Teil der Energieabsorptionseinrichtung, der die Energieabsorptionselemente zumindest teilweise umschließt und gegen Störeinflüsse schützt. Weiterhin können in oder an dem Gehäuse Befestigungselemente für die Energieabsorptionselemente, Längsführungen für das Eingriffselement und dergleichen ausgebildet werden. Bevorzugt ist zur Abdichtung des Energieabsorptionseinrichtung ein Dichtelement an dem Gehäuse angeordnet, bevorzugt als aufgespritzte Elastomerdichtelement. Dadurch kann erreicht werden, dass die Energieabsorptionseinrichtung vor Umwelteinflüssen wie Staub geschützt ist.

In einer vorteilhaften Bauform ist zwischen den Energieabsorptionselementen ein Separierungselement angeordnet. Ein Separierungselement kann beispielsweise durch eine Trennwand oder ein zwischen benachbarte Energieabsorptionselemente eingelegtes Trennblech gebildet werden. Dadurch werden benachbarte Energieabsorptionselemente funktional sicher voneinander abgeschirmt, so dass die Funktion eines Energieabsorptionselements nicht durch benachbarte Energieabsorptionselemente beeinflusst werden kann. Dies kommt einer erhöhten Betriebs- und Funktionssicherheit im Crashfall zugute.

Eine Ausführungsform der Erfindung sieht vor, dass zumindest eines der Energieabsorptionselemente als langgestrecktes Biegeelement, auch Biegestreifen genannt, ausgebildet ist, das zwei über eine Umbiegung miteinander verbundene Schenkel aufweist, wobei der eine Schenkel am Eingriffselement festlegbar ist und der andere Schenkel an dem inneren Mantelrohr in Längsrichtung abstützbar ist. Es ist bekannt, als Energieabsorptionselement einen Biegedraht oder Biegestreifen einzusetzen, der durch eine Umbiegung von bevorzugt 180° U-förmig ausgebildet ist, wobei sich die Schenkel im Wesentlichen parallel zur Längsrichtung erstrecken, wobei unter "im Wesentlichen parallel" eine Abweichung mit einem Raumwinkel von ±10° verstanden wird. Das Ende des einen Schenkels ist über das Eingriffselement mit dem inneren Mantelrohr bezüglich einer Bewegung in Längsrichtung verbunden, beispielsweise indem es sich im Crashfall an einem Anschlag oder Widerlager abstützt. Das andere Ende wird zur Einkopplung mit dem Koppelelement verbunden, beispielsweise durch Einfügen eines stiftförmigen Kopplungselements oder Mitnehmers, von dem besagtes Ende im Crashfall in Längsrichtung mitgenommen wird. Bei einer relativen Verschiebung der beiden Enden im Crashfall wandert die Durchbiegung über die Längserstreckung des Biegeelements, wobei durch Verformungsarbeit kinetische Energie umgesetzt bzw. absorbiert wird. Erfindungsgemäß können zwei oder mehr langgestreckte Biegeelemente wie oben beschrieben in radialer Richtung stapelförmig übereinander angeordnet werden.

Ein Biegestreifen in der vorangehend beschriebenen Ausführung erstreckt sich mit seiner Umbiegung parallel zu einer Ebene, womit gemeint ist, dass die U-förmige Erstreckung in einer Ebene bzw. parallel zu einer Ebene liegt. Anders ausgedrückt erfolgt die Umbiegung der Biegestreifen um bevorzugt 180° um eine senkrecht auf besagter Ebene stehende Flächennormale. Die Flächennormale verläuft quer, bevorzugt senkrecht zur Längsachse. Zwischen den Schenkeln und der Umbiegung wird jeweils eine Eingriffsöffnung eines Energieabsorptionselements geformt.

Erfindungsgemäß können zumindest zwei Biegestreifen senkrecht zur Ebene ihrer Umbiegung stapelförmig übereinander angeordnet sein, also in Richtung dieser Flächennormalen. Folglich verlaufen die ersten und zweiten Schenkel von zwei übereinander gestapelten Biegestreifen zumindest abschnittweise parallel zueinander, ebenso wie die Bereiche der Umbiegung in zueinander parallelen Ebenen liegen können. Dadurch sind die Biegestreifen so übereinander gestapelt, dass sie mit ihren Eingriffsöffnungen zumindest teilweise deckungsgleich übereinander liegen. Dadurch kann beispielsweise ein Koppelelement in Form eines Mitnehmerstifts in Richtung der Flächennormalen die Eingriffsöffnungen erfindungsgemäß übereinander gestapelter Energieabsorptionselemente durchgreifen bzw. in diese eintauchen.

Zur Realisierung der vorangehend erläuterten Anordnung kann vorgesehen sein, dass die Energieabsorptionselemente mit Abstand zur Längsachse quer zur Längsrichtung sandwichartig benachbart angeordnet sind, wobei sich die Umbiegung der Biegestreifen jeweils parallel zu einer Ebene erstreckt, zu der die Biegestreifen senkrecht stapelförmig übereinander angeordnet sind. Durch diese stapelförmige Anordnung der Biegestreifen senkrecht zur Ebene ihrer jeweiligen Umbiegung beeinflusst die Verformung des einen Biegestreifens nicht die Verformung des jeweils anderen Biegestreifens. Damit kann eine sandwichartig-stapelförmige Anordnung von zwei oder mehr Biegestreifen zur Verfügung gestellt werden, bei der keine unerwünschte gegenseitige Beeinflussung des Energieabsorptionsverhaltens der Biegestreifen erfolgt.

Weiterhin ist es vorteilhaft, dass zumindest ein Biegeelement und/oder das Gehäuse und/oder das Separierungselement mit einer Gleitbeschichtung versehen ist. Dadurch wird gewährleistet, dass die Verformung des Biegedrahts oder Biegestreifens im Crashfall gleichmäßig abläuft und nicht durch Reibung oder Festfressen behindert wird, falls Teile der Biegeelemente miteinander oder mit umgebenden Bauteilen wie dem Gehäuse in Kontakt kommen. Dadurch wird die Funktionssicherheit erhöht.

Bevorzugt ist vorgesehen, dass die Koppelvorrichtung einen pyroelektrischen Aktuator aufweist, der zum pyrotechnischen Antrieb des Koppelelements ansteuerbar ist. Ein pyroelektrischer Aktuator, oft auch als "Pyroswitch" oder "Pyroschalter" bezeichnet, weist eine pyrotechnische Treibladung auf, die durch einen elektrischen Impuls gezündet wird. Die Explosion der Treibladung beschleunigt einen beweglichen Aktuator, der in der vorliegenden Anwendung mit einem Koppelelement verbunden ist. Dadurch kann das Koppelelement mit dem Eingriffselement und dem Energieabsorptionselement in Eingriff oder außer Eingriff gebracht werden, oder auf andere Art eine mechanische Kopplung zwischen der äußeren Manteleinheit und dem oder den Energieabsorptionselementen bewerkstelligen. Vorteile einer derartigen pyroelektrischen Stellvorrichtung sind die extrem schnelle Auslösung im Crashfall sowie die hohe Zuverlässigkeit und Betätigungskraft, welche im Bedarfsfall eine sichere Einkopplung oder Auskopplung eines oder mehrerer Energieabsorptionselemente gewährleistet. Beispielsweise kann das Koppelelement als stiftförmiger Mitnehmer ausgebildet sein, der zur Verriegelung des Eingriffselements mit einem Energieabsorptionselement in Formschlussausnehmungen eingeschossen oder herausgeschossen wird.

Eine Ausführungsform der Erfindung sieht vor, dass die äußere Manteleinheit in einer Konsole gehalten ist, die am Fahrzeug fixierbar ist. Somit kann eine besonders steife Anbindung der Lenksäule am Fahrzeug realisiert werden.

Die Manteleinheit wird dabei bevorzugt an einem vorderen Ende der Konsole verschwenkbar um eine Schwenkachse gehalten und zwischen zwei Seitenwangen der Konsole aufgenommen, wobei mittels der Spanneinrichtung die Manteleinheit gegenüber der Konsole festsetzbar ist.

Durch die Bereitstellung der Schwenkachse zwischen der Manteleinheit und der Konsole kann die Neigungsverstellung der Manteleinheit gegenüber der Konsole realisiert werden. Somit kann die Neigungsverstellung, auch Höhenverstellung genannt, der Manteleinheit noch vereinfacht werden, im Gegensatz zur Anbringung der Manteleinheit direkt am Fahrzeug mittels einer Achse die durch eine Aufnahmebohrung der Manteleinheit und einer entsprechenden Aufnahmeabschnitts des Fahrzeugquerträgers gesteckt werden muss, um die Schwenkachse bereitzustellen.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer perspektivischen Ansicht,
- Figur 2: eine Teilansicht der Lenksäule wie in Figur 1 in teilweise auseinander gezogenem Zustand,
- Figur 3: eine Teilansicht des Mantelrohrs der Lenksäule wie in Figur 1,
- Figur 4: eine Teilansicht wie in Figur 3 in teilweise auseinander gezogenem Zustand,
- Figur 5: einen Längsschnitt durch eine Lenksäule gemäß Figur 1 in Normalzustand vor einem Crash,
- Figur 6: einen Längsschnitt durch eine Lenksäule gemäß Figur 1 nach einem Crash,
- Figur 7: eine perspektivische Teilansicht einer erfindungsgemäßen Lenksäule während eines Crashfalls (nach einem Crash) mit hohem Crashniveau,
- Figur 8: eine Ansicht einer erfindungsgemäßen Lenksäule wie in Figur 7 während eines Crashfalls (nach einem Crash) mit niedrigem Crashniveau,
- Figur 9: ein Energieabsorptionselement (Biegestreifen) in einer Ansicht in Normalenrichtung auf die Biegeebene.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

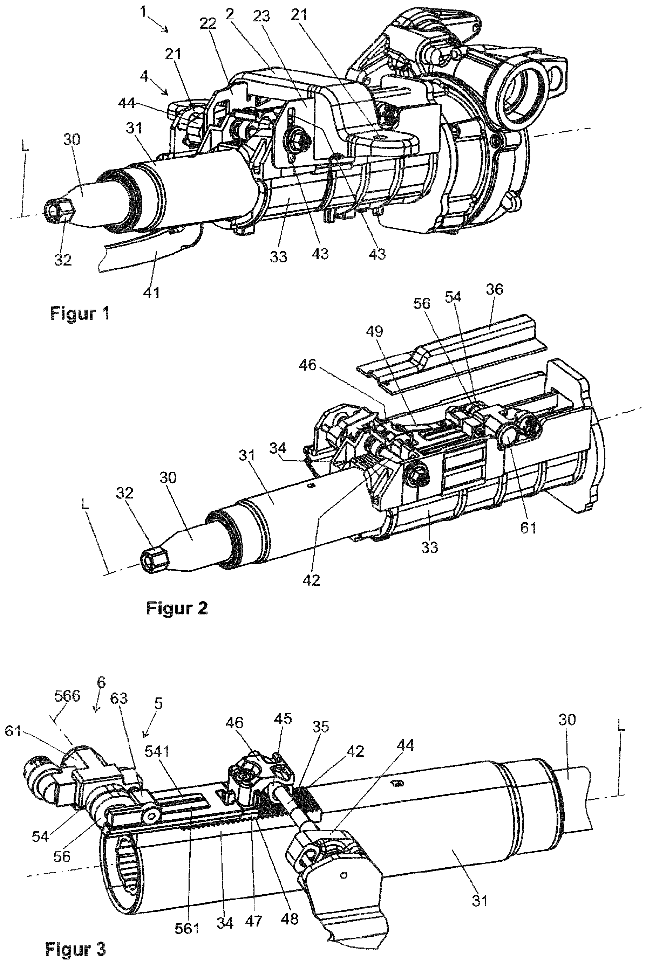

In Figuren 1 und 2 ist eine erfindungsgemäße Lenksäule 1 schematisch in perspektivischer Ansicht schräg von hinten (bezogen auf die Fahrtrichtung eines nicht gezeigten Kraftfahrzeugs) dargestellt.

Die Lenksäule 1 kann an der Karosserie eines nicht dargestellten Kraftfahrzeugs mittels einer Konsole 2 befestigt werden, die der Übersichtlichkeit halber in der Ansicht von Figur 2 weggelassen ist. Die Konsole 2 umfasst zur Verbindung mit der Karosserie Befestigungsmittel 21, von denen sich Seitenwangen 22, 23 erstrecken.

Eine Lenkspindel 30 ist um die Längsachse L drehbar in einem inneren Mantelrohr 31, kurz als Mantelrohr 31 bezeichnet, gelagert, wobei auf einem Befestigungsabschnitt 32 am hinteren Ende ein nicht dargestelltes Lenkrad auf der Lenkspindel 30 anbringbar ist. Das Mantelrohr 31 ist in einer in Längsrichtung durchgehenden Aufnahme einer äußeren Manteleinheit 33, kurz Manteleinheit 33, gehaltert.

Eine Spanneinrichtung 4 kann durch manuelle Betätigung eines Spannhebels 41 wahlweise in Fixierstellung (Feststellposition, geschlossener Zustand) oder Freigabestellung (Löse-position, geöffneter Zustand) gebracht werden. Dabei ist in Freigabestellung das innere Mantelrohr 31 zur Längsverstellung in Richtung der Längsachse L innerhalb der äußeren Manteleinheit 33 teleskopartig verschiebbar, und die äußere Manteleinheit 33 ist in Höhenrichtung H relativ zur Konsole 2 in den Pfeilrichtungen auf und ab verstellbar. In Fixierstellung ist das Mantelrohr 31 in der Manteleinheit 33 in Längsrichtung fixiert, und die äußere Manteleinheit 33 ist in Höhenrichtung H zwischen den Seitenwangen 22 und 23 fixiert. Die Fixierstellung entspricht dem Normalbetrieb der Lenksäule 1, in dem sichergestellt ist, dass bei den üblicherweise über das Lenkrad auf die Lenkspindel 30 einwirkenden Kräften die eingestellte Lenkradposition in Längs- und Höhenrichtung nicht verändert wird.

Im Einzelnen umfasst die Spanneinrichtung 4 einen drehfest mit dem Spannhebel 41 verbundenen Spannbolzen 42, welcher quer zur Längsachse L in der äußeren Manteleinheit 33 um seine Achse drehbar gelagert ist. In Längsrichtung, d.h. in Richtung der Längsachse L ist der Spannbolzen 42 an der äußeren Manteleinheit 33 unverschiebbar gehaltert. Durch Langlöcher 43 in den einander gegenüberliegenden Seitenwangen 22, 23 ist der Spannbolzen 42 hindurchgeführt. Über eine an sich bekannte Spannmechanik 44, die beispielsweis eine drehfest auf dem Spannbolzen 42 angebrachte erste Nockenscheibe und eine dieser gegenüberliegende, drehfest an der Seitenwange 22 angeordneten zweite Nockenscheibe umfassen kann, werden bei einer Drehung des Spannbolzens 42 die beiden Seitenwangen 22 und 23 gegeneinander zusammengezogen, wodurch die Manteleinheit 33 zwischen den Seitenwangen 22 und 23 kraftschlüssig festgeklemmt wird. Im Prinzip können in der Spannmechanik 44 beliebige bekannte Mechanismen zur Umsetzung einer Drehung des Spannbolzens 42 in eine Klemmbewegung zum Einsatz kommen, beispielsweise mit Nocken, Kippstiften oder Wälzkörpern.

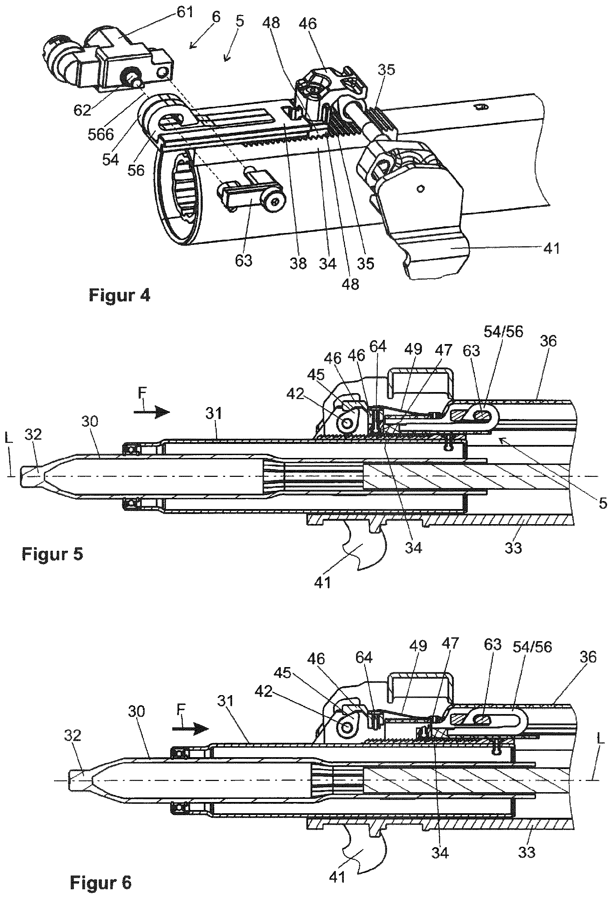

Das Mantelrohr 31 ist in den Figuren 3 und 4 einzeln dargestellt, wobei zur besseren Übersichtlichkeit die Manteleinheit 33 weggelassen ist. Das Zusammenwirken der Funktionselemente kann den in Figuren 5 und 6 gezeigten Längsschnitten entlang der Längsachse L entnommen werden.

Zur Fixierung des Mantelrohrs 31 in Längsrichtung relativ zur Manteleinheit 33 ist an dem Mantelrohr 31 ein Eingriffsteil 34 angebracht, welches im dargestellten Beispiel als in Längsrichtung erstreckte Zahnplatte ausgebildet ist mit einer umfangsseitig außen ausgebildeten Verzahnung 35, welche quer zur Längsachse L verlaufende Zähne in Form von Sägezähne hat. Ein Arretierelement 46, welches wie der Spannbolzen 42 in Richtung der Längsachse L unverschiebbar an der äußeren Manteleinheit 33 abgestützt ist, weist ein Übertragungselement 47 mit einer Verzahnung 48 auf, die zur Einstellung der Fixierstellung mit der Verzahnung 35 des Eingriffsteils 34 quer zur Längsachse L in Eingriff gebracht werden kann. In der Fixierstellung ist dadurch das Übertragungselement 47 bezüglich der Längsrichtung formschlüssig über das Eingriffsteil 34 mit dem Mantelrohr 31 verbunden.

Auf dem Spannbolzen 42 ist ein Nocken 45 drehfest angebracht, der mit dem Arretierelement 46 zusammenwirkt. Wird der Spannbolzen 42 in Freigabestellung gedreht, drückt der Nocken 45 gegen das Arretierelement 46, wodurch die am Übertragungselements 47 ausgebildete Verzahnung 48 aus der Verzahnung 35 des Eingriffselements 35 abgehoben und außer Eingriff gebracht wird. Dann kann das Mantelrohr 31 in Längsrichtung frei zur Einstellung der gewünschten Längsposition in der Manteleinheit 33 verschoben werden.

Zur Fixierung wird der Spannbolzen 42 in Feststellposition gedreht, wobei das Arretierelement 46 durch die Andruckkraft eines Federelements 49, welches sich an der Manteleinheit 33 abstützt, gegen das Eingriffselement 34 angedrückt wird, wie dies Figur 5 entnehmbar ist. Dabei kommen die Verzahnungen 35 und 48 formschlüssig in Eingriff, so dass das Übertragungselement 47 in Fixierposition formschlüssig mit dem Eingriffselement 34 verbunden ist und in Richtung der Längsachse unverschiebbar mit dem Mantelrohr 31 verbunden ist.

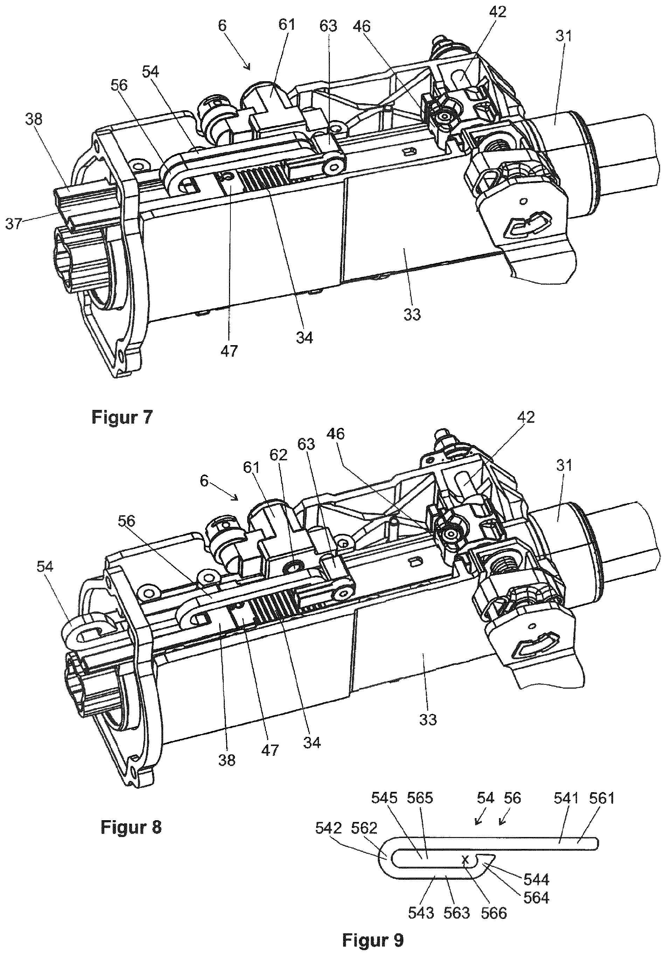

Eine Energieabsorptionseinrichtung 5 weist ein erstes Energieabsorptionselement 54 und ein zweites Energieabsorptionselement 56 auf. Die beiden Energieabsorptionselemente 54 und 56 sind hinsichtlich ihrer Funktion und Form im Wesentlichen identisch. Im dargestellten Beispiel sind die Energieabsorptionselemente 54 und 56 hinsichtlich ihrer Form im Wesentlichen identisch ausgebildet. Wie in Figur 9 dargestellt, ist jedes der Energieabsorptionselemente 54 und 56 jeweils als bogenförmiger Biegedraht bzw. Biegestreifen gestaltet, mit einem ersten Schenkel 541 bzw. 561, der über eine Umbiegung 542 bzw. 562 von etwa 180° mit einem zweiten Schenkel 543 bzw. 563 verbunden ist. Am Ende des zweiten Schenkels 543 bzw. 563 ist jeweils ein Mitnehmerhaken 544 bzw. 564 durch einen gegen den ersten Schenkel 541 bzw. 561 abgebogenen Endbereich ausgebildet. Somit wird durch die Schenkel 541, 543, die Umbiegung 542 und den Mitnehmerhaken 544, bzw. durch die Schenkel 561, 563, die Umbiegung 562 und den Mitnehmerhaken 564 jeweils eine Eingriffsöffnung 545 bzw. 565 eines Energieabsorptionselements 54 bzw. 56 geformt. Die Schenkel 541, 543 bzw. 561, 563 liegen parallel zur Ebene der Umbiegungen 542 bzw. 562, die als Biegeebene bezeichnet und eine Flächennormale 566 aufweist, die in Figur 9 senkrecht zur Zeichenebene steht.

Die Energieabsorptionselemente 54 und 56 können als Blech-Stanzteile ausgebildet sein, so dass eine kostengünstige Herstellung gewährleistet ist.

Den Darstellungen der Figuren 3, 4, 5 und 6 ist entnehmbar, wie die Energieabsorptionselemente 54 und 56 deckungsgleich nebeneinander angeordnet sind, mit parallelen Flächennormalen 566. Dadurch sind die Biegestreifen so angeordnet, dass sie mit ihren Eingriffsöffnungen 545 und 565 bevorzugt deckungsgleich, zumindest teilweise deckungsgleich übereinander liegen.

An der äußeren Manteleinheit 33 ist eine Koppelvorrichtung 6 befestigt. Diese weist einen pyroelektrischen Aktuator 61 auf, von dem ein stiftförmiges Koppelelement 62 durch elektrische Zündung einer pyrotechnischen Treibladung quer zur Längsachse L, parallel zur Flächennormalen 566 der Energieabsorptionselemente 54 und 56 bewegbar ist. Im nicht aktivierten Zustand greift das Koppelelement 62 in die Eingriffsöffnung 545 des Energieabsorptionselements 54 hinter den Mitnehmerhaken 544 ein, so dass das Energieabsorptionselement 54 über die Koppelvorrichtung 6 mit der Manteleinheit 33 verbunden ist. Wird die Treibladung gezündet, bewegt der pyroelektrische Aktuator 61 das Koppelelement 62 relativ zum Energieabsorptionelement 54 aus dessen Eingriffsöffnung 544 zurück, so dass das Energieabsorptionselement 54 von der Manteleinheit 33 mechanisch getrennt, d.h. abgekoppelt ist.

Das dem Energieabsorptionselement 54 benachbarte Energieabsorptionselement 56 ist über ein Verbindungsstück 63 über die Koppeleinrichtung 6 fest mit der Manteleinheit 33 verbunden. Dadurch bleibt das Energieabsorptionselement 54 zwischen der Manteleinheit 33 und dem Mantelrohr 31 eingekoppelt, wenn durch Aktivierung des pyroelektrischen Aktuators 61 das Energieabsorptionselement 56 ausgekoppelt wird.

Mit ihren dem pyroelektrischen Aktuator 61 abgewandten Schenkeln 541 und 561 stützen sich die Energieabsorptionselemente 54 und 56 in Richtung der Längsachse L gegen das Übertragungselement 47 ab. In Feststellposition ist das Übertragungselement 47 wie oben beschrieben in Längsrichtung unverschiebbar mit dem Eingriffselement 34 verbunden, so dass die Energieabsorptionselemente 54 und 56 erfindungsgemäß zwischen der Koppelvorrichtung 6 und dem Eingriffselement 34 angeordnet sind.

Im Crashfall wird durch eine auf das Lenkrad aufprallende Person eine große Kraft F in Längsrichtung über die Lenkspindel 30 auf das Mantelrohr 31 übertragen. Die Kraft F wird über das Eingriffselement 34 und die ineinandergreifenden Verzahnungen 35 und 48 in das Übertragungselement 47 eingeleitet. Das Übertragungselement 47 ist über eine separierbare Verbindung mit einem Sollbruchelement 64 in Form eines Scherstiftes mit dem Arretierelement 46 verbunden. Im Crashfall, wenn die Kraft F einen vorgegebenen Grenzwert überschreitet, bricht das Sollbruchelement 64, d.h. der Scherstift wird abgeschert, so dass das Übertragungselement 47 von dem Arretierelement 46, welches sich in Längsrichtung gegen die Manteleinheit 33 abstützt, abgetrennt wird, wie dies in Figur 6 dargestellt ist. Das Mantelrohr 31 wird nach dem Bruch des Sollbruchelements 64 in Richtung der Kraft F in Fahrtrichtung nach vorn in die Manteleinheit 33 eingeschoben.

Im Crashfall wird die Kraft F über das Eingriffselement 34 und das damit verbundene Übertragungselement 64 in das Energieabsorptionselement 56 eingeleitet, welches sich über das Verbindungsstück 63 an der Koppelvorrichtung 6 abstützt, so dass es unter Absorption kinetischer Energie durch fortlaufende Verlagerung der Umbiegung 562 deformiert wird. Falls der pyroelektrische Aktuator 61 beim Crash nicht ausgelöst wurde, ist das zweite Energieabsorptionselement 54 über das Koppelelement 62 und die Koppelvorrichtung 6 ebenfalls mit der feststehenden Manteleinheit 33 verbunden, so dass es sich im Kraftfluss zwischen Eingriffselement 34 und Koppelvorrichtung 6 befindet und mit dem Energieabsorptionselement 56 zusammen verformt wird. Durch die gleichzeitig stattfindende Verformung der Energieabsorptionselemente 54 und 56 wird ein hohes Crashniveau mit großer Energieabsorption durch die beiden Energieabsorptionselemente 54 und 56 realisiert. Diese Situation nach dem Crashfall ist in Figur 7 dargestellt. Es ist deutlich erkennbar, dass beide Energieabsorptionselemente 54 und 56 verformt sind.

Wird im Crashfall der pyroelektrische Aktuator 61 betätigt, wird das Energieabsorptionselement 54 ausgekoppelt und dadurch deaktiviert, so dass nur das über das Verbindungsstück 63 ständig über die Koppelvorrichtung 6 mit der Manteleinheit 33 verbundene Energieabsorptionselement 56 verformt wird, wodurch ein niedrigeres Crashniveau mit kleinerer Energieabsorption realisiert wird. Diese Situation nach dem Crashfall ist in Figur 8 dargestellt. Es ist erkennbar, dass nur das Energieabsorptionselement 56 verformt wird, während das ausgekoppelte Energieabsorptionselement 54 unverformt geblieben ist.

Um zu verhindern, dass die Energieabsorptionselemente 54 und 56 im Crashfall ausweichen und sich unkontrolliert verformen, kann ein Gehäuse 36 vorgesehen sein, welches die Energieabsorptionselemente 54 und 56 und einen definiert begrenzten Verformungsraum zur Verfügung stellt. Wie in Figur 2 erkennbar, kann das Gehäuse 36 durch ein im Wesentlichen wannenförmiges Blechformteil gebildet werden, welches auf der Manteleinheit 33 angebracht wird, wie Figuren 2, 5 und 6 entnehmbar ist.

Um eine kontrollierte Verformung zu unterstützen, können die Schenkel 541 und 561 in einer nutförmigen Ausnehmung 37 eines Stützelements 38 angeordnet sein. Das Stützelement 38 stützt sich in Richtung der Längsachse L an dem Übertragungselement 47 ab. Dadurch wird ein unkontrolliertes seitliches Ausweichen der Energieabsorptionselemente 54 und 56 verhindert und eine kontrollierte Verformung sichergestellt. Die Energieabsorptionselemente 54 und 56 können sich in Längsrichtung unmittelbar an dem Übertragungselement 47 abstützen, oder über das Stützelement 38, was keinen Unterschied hinsichtlich der Funktion macht.

### Bezugszeichenliste

- 1: Lenksäule
- 2: Konsole
- 21: Befestigungsmittel
- 22, 23: Seitenwangen
- 30: Lenkspindel
- 31: (inneres) Mantelrohr
- 32: Befestigungsabschnitt
- 33: (äußere) Manteleinheit
- 34: Eingriffselement
- 35: Verzahnung
- 36: Gehäuse
- 37: Ausnehmung
- 38: Stützelement
- 4: Spanneinrichtung
- 41: Spannhebel
- 42: Spannbolzen
- 43: Langloch
- 44: Spannmechanik
- 45: Nocken
- 46: Arretierelement
- 47: Übertragungselement
- 48: Verzahnung
- 49: Federelement
- 5: Energieabsorptionseinrichtung
- 54, 56: Energieabsorptionselement
- 541, 561: erster Schenkel
- 542, 562: Umbiegung
- 543, 563: zweiter Schenkel
- 544, 564: Mitnehmerhaken
- 545, 565: Eingriffsöffnung
- 6: pyroelektrischer Aktuator
- 61: Befestigungselement
- 62: Koppelelement
- 63: Verbindungsstück
- 64: Sollbruchelement
- L: Längsachse

## Patentansprüche

1. Lenksäule (1) für ein Kraftfahrzeug, umfassend
ein inneres Mantelrohr (31), in dem eine Lenkspindel (30) um ihre Längsachse (L) drehbar gelagert ist,
eine äußere Manteleinheit (33), in der das innere Mantelrohr (31) gehaltert ist, und die mit der Karosserie eines Kraftfahrzeugs direkt oder indirekt verbindbar ist,
eine Spanneinrichtung (4), die in Fixierstellung die äußere Manteleinheit (33) relativ zu dem inneren Mantelrohr (31) festlegt und die in Freigabestellung eine Verstellung des inneren Mantelrohrs (31) relativ zur äußeren Manteleinheit (33) zumindest in Längsrichtung freigibt,
wobei die Spanneinrichtung (4) mindestens ein Arretierelement (46) aufweist, welches sich in Längsrichtung an der äußeren Manteleinheit (33) abstützt und in Fixierstellung in Längsrichtung unverschiebbar mit einem Eingriffselement (34) verbunden ist, welches mit dem inneren Mantelrohr (31) verbunden ist, und in Freigabestellung von dem Eingriffselement (34) gelöst ist und eine relative Bewegung des inneren Mantelrohrs (31) zur äußeren Manteleinheit (33) in Längsrichtung freigibt,
wobei das innere Mantelrohr (31) und die äußere Manteleinheit (33) über eine Energieabsorptionseinrichtung (5) gekoppelt sind, die zumindest zwei Energieabsorptionselemente (54, 56) und eine Koppelvorrichtung (6) aufweist, wobei über die Koppelvorrichtung (6) zumindest ein erstes (56) oder ein zweites (54) Energieabsorptionselement zwischen dem inneren Mantelrohr (31) und der äußeren Manteleinheit (33) einkoppelbar oder auskoppelbar ist, welches in eingekoppeltem Zustand in Fixierstellung der Spanneinrichtung (4) bei einer relativen Verschiebung von innerem Mantelrohr (31) und äußerer Manteleinheit (33) plastisch verformbar ist,
wobei die Energieabsorptionselemente (54, 56) zwischen der Koppelvorrichtung (6) und dem Eingriffselement (34) angeordnet sind, wobei die Koppelvorrichtung (6) mit der äußeren Manteleinheit (33) verbunden ist und ein bewegbares Koppelelement (62) aufweist, welches bei Aktivierung der Koppelvorrichtung (6) mindestens ein Energieabsorptionselement (54) zwischen dem inneren Mantelrohr (31) und dem Eingriffselement (34) einkoppelt oder auskoppelt, **dadurch gekennzeichnet,**
**dass** das Koppelelement (62) mit Abstand zur Längsachse (L) neben dem inneren Mantelrohr (31) angeordnet ist, so dass die Bewegungsbahn des Koppelelements (62) quer zur Längsachse (L) am inneren Mantelrohr (31) vorbei verläuft.

2. Lenksäule nach Anspruch 1, **dadurch gekennzeichnet, dass** das Koppelelement (62) einen Mitnehmerstift aufweist, der zur Einkopplung oder Auskopplung quer zur Längsachse (L) bewegbar ist und in oder außer Wirkeingriff mit einem Energieabsorptionselement (54, 56) bringbar ist.

3. Lenksäule nach einem der vorhergehenden Ansprüche, **dadurch gekennzeichnet, dass** ein Energieabsorptionselement (54, 56) als langgestrecktes Biegeelement (54, 56) ausgebildet ist, das zwei über eine Umbiegung (542, 562) miteinander verbundene Schenkel (541, 561, 543, 563) aufweist, wobei die Umbiegung (542, 562) und die Schenkel (541, 561, 543, 563) parallel zu einer Biegeebene mit einer Flächennormalen (566) liegen.

4. Lenksäule nach einem der vorangehenden Ansprüche, **dadurch gekennzeichnet, dass** der erste Schenkel (543, 563) eines Biegeelements (54, 56) an der Koppelvorrichtung (6) festlegbar ist und der zweite Schenkel (541, 561) an dem Eingriffselement (34) in Längsrichtung abstützbar ist.

5. Lenksäule nach einem der vorhergehenden Ansprüche, **dadurch gekennzeichnet, dass** ein Energieabsorptionselement (54, 56) an dem Arretierelement (46) abstützbar ist.

6. Lenksäule nach einem der vorhergehenden Ansprüche, **dadurch gekennzeichnet, dass** das Arretierelement (46) ein Übertragungselement (47) aufweist, gegen das zumindest eines der Energieabsorptionselemente (54, 56) abstützbar ist.

7. Lenksäule nach Anspruch 6, **dadurch gekennzeichnet, dass** das Übertragungselement (47) mit dem Arretierelement (46) über eine separierbare Verbindung verbunden ist.

8. Lenksäule nach einem der vorangehenden Ansprüche, **dadurch gekennzeichnet, dass** ein Energieabsorptionselement (54, 56) von einem Gehäuse (36) umgeben ist, welches seine Verformung im Crashfall räumlich begrenzt.

## Claims

1. Steering column (1) for a motor vehicle, comprising an inner casing tube (31), in which a steering spindle (30) is mounted such that it can be rotated about its longitudinal axis (L),
an outer casing unit (33), in which the inner casing tube (31) is retained and which can be directly or indirectly connected to the body of a motor vehicle, and a clamping device (4), which, in a fixing position, secures the outer casing unit (33) relative to the inner casing tube (31) and, in an enabling position, enables adjustment of the inner casing tube (31) relative to the outer casing unit (33) at least in the longitudinal direction,
wherein the clamping device (4) comprises at least one arresting element (46), which is supported in the longitudinal direction on the outer casing unit (33) and, in the fixing position, is connected in a longitudinally undisplaceable manner to an engagement element (34), which is connected to the inner casing tube (31), and, in the enabling position, is released from the engagement element (34) and enables movement of the inner casing tube (31) relative to the outer casing unit (33) in the longitudinal direction,
wherein the inner casing tube (31) and the outer casing unit (33) are coupled via an energy absorption device (5), which comprises at least two energy absorption elements (54, 56) and a coupling device (6), wherein at least a first (56) or a second (54) energy absorption element can be coupled in between the inner casing tube (31) and the outer casing unit (33), or can be decoupled therefrom, via the coupling device (6) and in the coupled-in state, in the fixing position of the clamping device (4), said energy absorption element can be plastically deformed during displacement of the inner casing tube (31) relative to the outer casing unit (33), wherein the energy absorption elements (54, 56) are arranged between the coupling device (6) and the engagement element (34), wherein the coupling device (6) is connected to the outer casing unit (33) and comprises a movable coupling element (6) which, upon activation of the coupling device (6), couples in at least one energy absorption element (54) between the inner casing tube (31) and the engagement element (34), or decouples said at least one energy absorption element therefrom, **characterized**
**in that** the coupling element (62) is arranged in a manner spaced apart from the longitudinal axis (L) next to the inner casing tube (31) such that the movement path of the coupling element (62) runs transversely to the longitudinal axis (L) past the inner casing tube (31).

2. Steering column according to Claim 1, **characterized in that** the coupling element (62) comprises a carrier pin which, for coupling-in or decoupling purposes, can be moved transversely to the longitudinal axis (L) and can be moved into or out of operative engagement with an energy absorption element (54, 56).

3. Steering column according to either of the preceding claims, **characterized in that** an energy absorption element (54, 56) is designed in the form of an elongate bending element (54, 56) comprising two limbs (541, 561, 543, 563) which are connected to one another via a bent-over portion (542, 562), wherein the bent-over portion (542, 562) and the limbs (541, 561, 543, 563) are located parallel to a bending plane with a surface normal (566) .

4. Steering column according to one of the preceding claims, **characterized in that** the first limb (543, 563) of a bending element (54, 56) can be secured on the coupling device (6) and the second limb (541, 561) can be supported on the engagement element (34) in the longitudinal direction.

5. Steering column according to one of the preceding claims, **characterized in that** an energy absorption element (54, 56) can be supported on the arresting element (46).

6. Steering column according to one of the preceding claims, **characterized in that** the arresting element (46) comprises a transmission element (47), against which at least one of the energy absorption elements (54, 56) can be supported.

7. Steering column according to Claim 6, **characterized in that** the transmission element (47) is connected to the arresting element (46) via a separable connection.

8. Steering column according to one of the preceding claims, **characterized in that** an energy absorption element (54, 56) is surrounded by a housing (36), which spatially delimits the deformation of said energy absorption element in the event of a crash.

## Revendications

1. Colonne de direction (1) pour un véhicule automobile, comprenant
un tube de protection intérieur (31) dans lequel un arbre de direction (30) est monté de manière à pouvoir tourner autour de son axe longitudinal (L),
une unité de protection extérieure (33) dans laquelle le tube de protection intérieur (31) est tenu et qui peut être reliée directement ou indirectement à la carrosserie d'un véhicule automobile,
un dispositif de serrage (4) qui, en position de fixation, fixe l'unité de protection extérieure (33) par rapport au tube de protection intérieur (31), et qui, en position de libération, autorise un réglage du tube de protection intérieur (31) par rapport à l'unité de protection extérieure (33) au moins dans la direction longitudinale,
dans laquelle le dispositif de serrage (4) présente au moins un élément d'arrêt (46) qui s'appuie sur l'unité de protection extérieure (33) dans la direction longitudinale, et qui, en position de fixation, est relié à un élément d'engagement (34) sans pouvoir coulisser dans la direction longitudinale, lequel est relié au tube de protection intérieur (31), et qui, en position de libération, est désolidarisé de l'élément d'engagement (34) et autorise un mouvement relatif du tube de protection intérieur (31) par rapport à l'unité de protection extérieure (33) dans la direction longitudinale,
dans laquelle le tube de protection intérieur (31) et l'unité de protection extérieure (33) sont accouplés par un dispositif d'absorption d'énergie (5) qui présente au moins deux éléments d'absorption d'énergie (54, 56) et un dispositif d'accouplement (6), au moins un premier (56) ou un deuxième (54) élément d'absorption d'énergie entre le tube de protection intérieur (31) et l'unité de protection extérieure (33) pouvant être accouplé ou désaccouplé au moyen du dispositif d'accouplement (6), ledit élément d'absorption d'énergie étant déformable plastiquement à l'état accouplé, dans la position de fixation du dispositif de serrage (4), lors d'un déplacement relatif du tube de protection intérieur (31) et de l'unité de protection extérieure (33),
dans laquelle les éléments d'absorption d'énergie (54, 56) sont disposés entre le dispositif d'accouplement (6) et l'élément d'engagement (34), le dispositif d'accouplement (6) étant accouplé à l'unité de protection extérieure (33) et présentant un élément d'accouplement (62) mobile qui, en cas d'activation du dispositif d'accouplement (6), accouple ou désaccouple au moins un élément d'absorption d'énergie (54) entre le tube de protection intérieur (31) et l'élément d'engagement (34),
**caractérisée en ce que** l'élément d'accouplement (62) est disposé à distance de l'axe longitudinal (L) à côté du tube de protection intérieur (31) de sorte que la trajectoire de l'élément d'accouplement (62) passe transversalement à l'axe longitudinal (L) devant le tube de protection intérieur (31).

2. Colonne de direction selon la revendication 1, **caractérisée en ce que** l'élément d'accouplement (62) présente une broche d'entraînement qui peut être déplacée transversalement à l'axe longitudinal (L) pour l'accouplement ou le désaccouplement et peut être amenée en or hors prise active avec un élément d'absorption d'énergie (54, 56).

3. Colonne de direction selon l'une quelconque des revendications précédentes, **caractérisée en ce qu'**un élément d'absorption d'énergie (54, 56) est réalisé sous la forme d'un élément de flexion allongé (54, 56) qui présente deux branches (541, 561, 543, 563) reliées l'une à l'autre par un cintrage (542, 562), le cintrage (542, 562) et les branches (541, 561, 543, 563) étant situés en parallèle à un plan de flexion avec une normale à la surface (566).

4. Colonne de direction selon l'une quelconque des revendications précédentes, **caractérisée en ce que** la première branche (543, 563) d'un élément de flexion (54, 56) peut être fixée au dispositif d'accouplement (6) et la deuxième branche (541, 561) peut s'appuyer sur l'élément d'engagement (34) dans la direction longitudinale.

5. Colonne de direction selon l'une quelconque des revendications précédentes, **caractérisée en ce qu'**un élément d'absorption d'énergie (54, 56) peut s'appuyer sur l'élément d'arrêt (46).

6. Colonne de direction selon l'une quelconque des revendications précédentes, **caractérisée en ce que** l'élément d'arrêt (46) présente un élément de transmission (47) contre lequel au moins l'un des éléments d'absorption d'énergie (54, 56) peut s'appuyer.

7. Colonne de direction selon la revendication 6, **caractérisée en ce que** l'élément de transmission (47) est relié à l'élément d'arrêt (46) par une liaison séparable.

8. Colonne de direction selon l'une quelconque des revendications précédentes, **caractérisée en ce qu'**un élément d'absorption d'énergie (54, 56) est entouré d'un carter (36) qui limite sa déformation dans l'espace en cas de collision.
